# EUROPEAN PATENT APPLICATION

(11) **EP 4 702 828 A1**
(43) Date of publication of application: **04.03.2026**
(21) Application number: 24198218.0
(22) Date of filing: 03.09.2024
(51) Int. Cl.: A01B 49/06, A01B 63/00, A01B 63/111, A01B 63/112, A01B 63/32

(54) **SYSTEM AND METHOD FOR GROUND PREPARATION**

(71) Applicant: Plantma Forestry AB, 771 30 Ludvika (SE)
(72) Inventor: Arvidsson, Hans, 77013 Grangärde (SE); Hedlund, Stefan, 82292 Alfta (SE); Arvidsson, Tobias, 80648 Gävle (SE)
(74) Representative: AWA Sweden AB

(57) **Abstract**

A system (100) and a method (1000) arranged for ground preparation and arranged to be integrated with a forestry or agricultural vehicle (110) are provided. The system comprises at least one blade (210) and a control unit (300) configured to attain a desired depth, Di, of the blade(s), wherein the system is configured to register a load (400) applied on the blade(s), a power parameter (410), and/or a skid parameter (420), wherein the control unit, based on at least one load threshold, Ti, a power threshold, P, and/or a skid threshold, S, is configured to indicate a raising (500) (and lowering (510), respectively) of the blade unit in case of the load exceeds (subceeds) the load threshold(s), Tᵢ, the power parameter of the vehicle exceeds (subceeds) the power threshold, P, and the skid parameter exceeds (subceeds) the skid threshold, S.

## Description

### FIELD OF THE INVENTION

The present invention generally relates to a system and method for ground preparation. More specifically, the present invention relates to system and method for ground preparation and arranged to be integrated with a forestry or agricultural vehicle.

### BACKGROUND OF THE INVENTION

There is a substantial interest in the field of forestry and agriculture to ameliorate the preparation of ground or soil. It should be noted that current methods, systems and/or vehicles for ground preparation in (or of) forestry or agriculture is considerably dependent on an operator's know-how, experience and/or manual operation. Furthermore, these methods, systems and/or vehicles are often set in advance, and do often not adapt to current environments or properties. Consequently, the results of the ground or soil preparation may be undesirable and/or the vehicles or systems may be prone to damage.

It is desired to improve the adaptivity of the methods, systems and/or vehicles for preparation of ground or soil, in order to improve the efficiency of the preparation and/or to minimize system or vehicle wear or damage.

### SUMMARY OF THE INVENTION

It is of interest to explore the possibility of improving the efficiency of ground or soil preparation and/or to minimize system or vehicle wear or damage.

This and other objects are achieved by providing a system and method having the features in the independent claims. Preferred embodiments are defined in the dependent claims.

According to a first aspect of the present invention, there is provided a system arranged for ground preparation and arranged to be integrated with a forestry or agricultural vehicle. The system comprises a blade unit comprising at least one blade arranged to penetrate and prepare ground (upon movement of the vehicle). The system further comprises a control unit coupled to the blade unit and configured to attain a desired depth, Di, of the at least one blade in the ground. The system is configured to register at least one of a load applied on the at least one blade (upon movement of the vehicle), a power parameter of the vehicle, and a skid parameter associated with a skidding of at least one wheel of the vehicle. The control unit, based on at least one of at least one load threshold, Tᵢ, a power threshold, P, and a skid threshold, S, is configured to indicate a raising of the blade unit in case of at least one of the load applied on the at least one blade and registered by the system exceeds at least one of the at least one load threshold, Tᵢ, the power parameter of the vehicle exceeds the power threshold, P, and the skid parameter exceeds the skid threshold, S. The control unit, based on at least one of at least one load threshold, Tᵢ, a power threshold, P, and a skid threshold, S, is configured to indicate a lowering of the blade unit in case the at least one blade is at a depth, Dₐ, wherein |Dₐ| < |Dᵢ| and in case of at least one of the load applied on the at least one blade and registered by the system subceeds at least one of the at least one threshold, Tᵢ, the power parameter of the vehicle subceeds the power threshold, P, and the skid parameter subceeds the skid threshold, S.

According to a second aspect of the present invention, there is provided a method for a system arranged for ground preparation and arranged to be integrated with a forestry or agricultural vehicle. The system comprises a blade unit comprising at least one blade arranged to penetrate and prepare ground (upon movement of the vehicle). The method comprises registering at least one of a load applied on the at least one blade (upon movement of the vehicle), a power parameter of the vehicle, and a skid parameter associated with a skidding of at least one wheel of the vehicle. The method comprises, based on at least one of at least one load threshold, Tᵢ, a power threshold, P, and a skid threshold, S, indicating a raising of the blade unit in case of at least one of the load applied on the at least one blade and registered by the method exceeds at least one of the at least one load threshold, Tᵢ, the power parameter of the vehicle exceeds the power threshold, P, and the skid parameter exceeds the skid threshold, S. The method further comprises, based on at least one of at least one load threshold, Tᵢ, a power threshold, P, and a skid threshold, S, indicating a lowering of the blade unit in case the at least one blade is at a depth, Dₐ, wherein |Dₐ| < |Dᵢ| and in case of at least one of the load applied on the at least one blade and registered by the method subceeds at least one of the threshold, Tᵢ, the power parameter of the vehicle subceeds the power threshold, P, and the skid parameter subceeds the skid threshold, S.

Thus, the present invention is based on the idea of providing a system arranged for ground preparation and arranged to be integrated (integrable) with a forestry or agricultural vehicle. The control unit of the system indicates a raising of the blade unit in case of the load applied on the blade(s) exceeds one or more load thresholds, Tᵢ, the power parameter of the vehicle exceeds the power threshold, P, and/or the skid parameter exceeds the skid threshold, S. Analogously, the control unit is configured to indicate a lowering of the blade unit in case the load applied on the blade(s) subceeds one or more threshold(s), Tᵢ, the power parameter of the vehicle subceeds the power threshold, P, and/or the skid parameter subceeds the skid threshold, S.

The present invention is advantageous in that the system may conveniently and efficiently indicate a raising and lowering of the blade unit comprising the blade(s) dependently on one of more of the criterions related to the load threshold(s), Tᵢ, the power threshold, P, and/or the skid threshold, S.

The present invention is advantageous in that the indication of the raising and lowering of the blade unit improves the efficiency of ground or soil preparation.

The present invention is further advantageous in that the indication of the raising and lowering of the blade unit minimizes system or vehicle wear or damage.

Concerning the load applied on the blade(s) with respect to the load threshold(s), Tᵢ, during movement of the vehicle, the capability of the present invention to raise and/or lower the blade unit accordingly provides several advantages, including a smoother and conveniently maintained soil or ground preparation, a reduced or minimized damage or wear to system (components) such as blade unit and/or blades, etc.

Concerning the power parameter of the vehicle with respect to the power threshold, P, the capability of the present invention to raise and/or lower the blade unit accordingly provides the particular advantage of avoiding a vehicle motor or engine failure or damage.

Concerning the skid parameter associated with a skidding of the wheel(s) of the vehicle with respect to the skid threshold, S, the capability of the present invention to raise and/or lower the blade unit accordingly provides the particular advantage of avoiding damage to the ground or soil from the wheel(s) of the vehicle.

According to the first aspect of the present invention, there is provided a system arranged for ground preparation and arranged to be integrated with a forestry or agricultural vehicle. Hence, the system arranged for ground (or soil) preparation may be implemented, integrable, integrated and/or arranged in (on) a forestry or agricultural vehicle. The system comprises a blade unit comprising at least one blade arranged to penetrate and prepare ground (upon movement of the vehicle). Hence, the blade unit comprises one or more blades which is (are) arranged to penetrate and prepare the ground or soil. The system further comprises a control unit coupled to the blade unit and configured to attain a desired depth, Di, of the at least one blade in the ground. The control unit may be substantially any unit, device, arrangement, or the like, configured and/or arranged to attain a desired depth, Di, of the blade(s) in the ground. The desired depth, Di, may constitute or represent a set point or a set (depth) value. The system is configured to register at least one of a load applied on the at least one blade (upon movement of the vehicle), a power parameter of the vehicle, and a skid parameter associated with a skidding of at least one wheel of the vehicle. Hence, the system is configured or arranged to register one or more of a load applied on the blade(s), a power parameter of the vehicle, and a skid parameter associated with a skidding of one or more wheels of the vehicle. By the wording "load applied on the at least one blade", it is here meant a pressure, force and/or torque applied on the blade(s) from the ground or soil (upon movement of the vehicle). The load applied on the at least one blade may be equivalent to, or proportional to, a load or pressure applied to cylinder(s) operably connected to the blade unit.

Based on at least one of (i.e. one or more of) at least one load threshold, Tᵢ, (i.e. threshold(s), Tᵢ, associated with the load applied on the blade(s)), a power threshold, P, (i.e. a power threshold, P, associated with the power parameter of the vehicle), and a skid threshold, S, (i.e. a threshold, S, associated with the skidding or slipping of one or more wheels of the vehicle), the control unit is configured to indicate a raising of the blade unit in case of at least one of (i.e. one or more of) the load applied on the at least one blade and registered by the system exceeds at least one of the at least one load threshold, Tᵢ, (i.e. exceeds one or more thresholds, Tᵢ), the power parameter of the vehicle exceeds the power threshold, P, and the skid parameter exceeds the skid threshold, S. Hence, the control unit is configured to indicate a raising of the blade unit in case of one or more of this (these) criteria is (are) fulfilled, i.e. any possible combination (permutation) of the different criteria or cases. For example, the control unit may be configured to indicate a raising of the blade unit (only) in case the load applied on the blade(s) and registered by the system exceeds one or more of the load threshold(s), Tᵢ. According to another example, the control unit may be configured to indicate a raising of the blade unit (only) in case the power parameter of the vehicle exceeds the power threshold, P, and/or the skid parameter exceeds the skid threshold, S. By the term "raising", it is here meant a lifting or a swiveling of the blade unit and/or the blade(s) with respect to the ground or soil. The control unit, based on at least one of (i.e. one or more of) at least one load threshold, Tᵢ, a power threshold, P, and a skid threshold, S, is configured to indicate a lowering of the blade unit in case the at least one blade is at a depth, Dₐ, wherein |Dₐ| < |Dᵢ| (i.e. that the actual depth, Dₐ, is smaller in magnitude (absolute value) such that |Dₐ| < |Dᵢ| is fulfilled) and in case of at least one of (i.e. one or more of) the load applied on the at least one blade and registered by the system subceeds at least one of the at least one threshold, Tᵢ, the power parameter of the vehicle subceeds the power threshold, P, and the skid parameter subceeds the skid threshold, S. Hence, if |Dₐ| < |Dᵢ|, the control unit is configured to indicate a lowering of the blade unit in case of one or more of this (these) criteria is (are) fulfilled, i.e. any possible combination (permutation) of the different criteria or cases. For example, the control unit may be configured to indicate a lowering of the blade unit (only) in case the load applied on the blade(s) and registered by the system subceeds one or more of the load threshold(s), Tᵢ. According to another example, the control unit may be configured to indicate a lowering of the blade unit (only) in case the power parameter of the vehicle subceeds the power threshold, P, and/or the skid parameter subceeds the skid threshold, S. By the term "lowering", it is here meant a lowering or a swiveling of the blade unit and/or the blade(s) with respect to the ground or soil.

According to an embodiment of the present invention, the raising and the lowering of the blade unit, respectively, may comprise a pivotal movement of the at least one blade. For example, blade(s) of the blade unit may be configured to pivot around a pivot (point), and the raising of the blade unit may comprise a pivotal movement backwards in relation to the direction of movement of the vehicle. Analogously, the lowering of the blade unit may comprise a pivotal movement forwards in relation to the direction of movement of the vehicle. The present embodiment is advantageous in that the blade(s) may swing backwards at the raising of the blade unit, thereby mitigating damage to the blade(s) and/or improving the preparation of the ground or soil.

According to an embodiment of the present invention, the load applied on the at least one blade may be associated with a torque about a pivot of the at least one blade. For example, the system may comprise one or more torque thresholds, and if the load applied on the at least one blade exceeds the torque threshold(s), the blade(s) may be configured to pivot.

According to an embodiment of the present invention, the system may further comprise at least one sensor coupled to the blade unit, wherein the at least one sensor is configured to sense the load applied on the at least one blade (upon movement of the vehicle). For example, the sensor(s) may be arranged on and/or coupled to one or more blades of the blade unit. The present embodiment is advantageous in that the sensor(s) may conveniently and accurately determine the load(s) applied on the blade(s) of the blade unit, which even further ameliorates the functionality of the system.

According to an embodiment of the present invention, the at least one load threshold, Tᵢ, is dependent on the desired depth, Di, of the at least one blade in the ground. Hence, the load threshold(s), Tᵢ, is (are) dependent on the desired depth, Di, of the blade(s) in the ground. Phrased differently, and according to an example, the load threshold(s), Tᵢ, may be set or determined according to the desired depth, Di, of the blade(s) in the ground. For example, a desired depth, Di, of the blade(s) in the ground with a (first) soil resistance, H₁, of the ground may have a (first) load threshold, T₁, and the desired depth, Di, of the blade(s) in the ground with a (second) soil resistance, H₂, of the ground may have a (second) load threshold, T₂, wherein H₁ < H₂ and T₁ < T₂.

According to an embodiment of the present invention, the at least one load threshold, Tᵢ, is dependent on a soil resistance, Hᵢ, of the ground. Hence, the load threshold(s), Tᵢ, is (are) dependent on the soil resistance, Hᵢ, of the ground. By "soil resistance", it is here meant soil (ground) resistance and/or hardness. For example, an increase in soil resistance, Hᵢ, between different types of ground or soil, may be associated with an increase of the load threshold(s), Tᵢ.

According to an embodiment of the present invention, the at least one load threshold, Tᵢ, comprises a first load threshold, T₁, associated with a first soil resistance, H₁, of the ground, a second load threshold, T₂, associated with a second soil resistance, H₂, of the ground, and a third load threshold, T₃, associated with a third soil resistance, H₃, of the ground, wherein H₁ < H₂ < H₃. Hence, the system may comprise three thresholds, T₁₋₃, each comprising a soil resistance, H₁₋₃. For example, the first soil resistance, H₁, may be denoted (represent) fine grain soil (i.e. ground or soil of relatively low resistance), the second soil resistance, H₂, may be denoted (represent) root reinforced soil (i.e. ground or soil of medium resistance), and the third soil resistance, H₃, may be denoted (represent) soil of stones and stumps (i.e. ground or soil of relatively high resistance).

According to an embodiment of the present invention, the system may further comprise a display coupled to the control unit, wherein the display is configured to indicate [to an operator of the vehicle] at least one of the raising of the blade unit, and the lowering of the blade unit. Hence, the system comprises a display (e.g. a visual display) to indicate a raising and/or a lowering of the blade unit to an operator of the vehicle. The present embodiment is advantageous in that the operator may hereby conveniently operate the raising and/or lowering of the blade unit via the information from the display, consequently leading to an improved preparation of the ground.

According to an embodiment of the present invention, the system may further comprise a manual control coupled to the blade unit and operable by an operator of the vehicle, wherein the manual control is arranged to control the raising of the blade unit, and the lowering of the blade unit. The present embodiment is advantageous in that the operator may hereby conveniently operate the raising and/or lowering of the blade unit by the manual control.

According to an embodiment of the present invention, the system is configured to automatically control the raising of the blade unit, and the lowering of the blade unit. The present embodiment is advantageous in that an automatic raising/lowering of the blade unit by the system may be performed without manual intervention.

According to an embodiment of the present invention, there is provided a planting system arranged to be integrated with a forestry or agricultural vehicle. The planting system comprises a system according to any one of the preceding embodiments, and a fertilizer distribution device configured to intermittently distribute fertilizer through an opening of the fertilizer distribution device to the ground prepared by the at least one blade according to a fertilizer distribution pattern, wherein the control unit is configured to operate the fertilizer distribution device based on the fertilizer distribution pattern.

According to an embodiment of the present invention, there is provided a forestry or agricultural vehicle arranged for ground preparation, comprising a system according to any one of the preceding embodiments or a planting system according to the above-mentioned embodiment.

Further objectives of, features of, and advantages with, the present invention will become apparent when studying the following detailed disclosure, the drawings and the appended claims. Those skilled in the art will realize that different features of the present invention can be combined to create embodiments other than those described in the following.

### BRIEF DESCRIPTION OF THE DRAWINGS

This and other aspects of the present invention will now be described in more detail, with reference to the appended drawings showing embodiment(s) of the invention.
Fig. 1a schematically shows a system according to an exemplifying embodiment of the present invention,
Figs. 1b and 1c schematically show a control unit of a system according to an exemplifying embodiment of the present invention,
Fig. 2 schematically shows a diagram associated with a system according to an exemplifying embodiment of the present invention, and
Figs. 3a and 3b schematically show systems according to exemplifying embodiments of the present invention.

### DETAILED DESCRIPTION

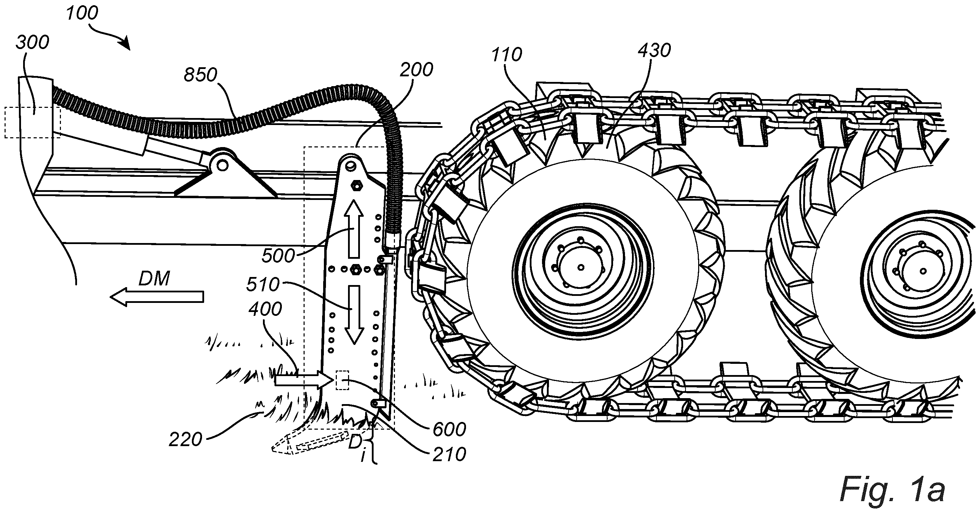

Fig. 1a schematically shows a system 100 arranged for ground preparation. The system 100 is arranged to be integrated with a forestry or agricultural vehicle 110. The direction of movement, DM, of the forestry or agricultural vehicle 110 is indicated by an arrow. The system 100 comprises a blade unit 200 which is schematically indicated by a dashed rectangle. The blade unit 200 comprises at least one blade 210 arranged to penetrate and prepare ground 220 upon movement of the vehicle 110.

The system 100 further comprises a control unit 300 which is schematically indicated by a dashed rectangle. It should be noted that the position or arrangement of the control unit 300 of the system 100 is arbitrary. The control unit 300 is coupled (connected) to the blade unit 200. The coupling (connection) between the control unit 300 and the blade unit 200 may be via wire or wirelessly. The control unit 300 is configured to attain a desired depth, Di, of the at least one blade 210 in the ground 220. The system 100 may be configured to register a load 400 applied on the at least one blade 210 upon movement of the vehicle 110. The load 400 is schematically indicated by an arrow and is in a direction opposite to the direction of movement, DM, of the forestry or agricultural vehicle 110. It should be noted that the load 400 may be distributed along the blade(s) 210. The system 100 may comprise at least one sensor 600 coupled to and/or arranged on the blade unit 200, wherein the sensor(s) 600 is (are) configured to sense the load 400 applied on the blade(s) 210 upon movement of the vehicle 110.

The system 100 may further be configured to register a power parameter of the vehicle 110. Furthermore, the system 100 may be configured to register a skid parameter associated with a skidding of at least one wheel 430 of the vehicle 110.

The system 100 may further comprise a fertilizer distribution device 850. The fertilizer distribution device 850 may be configured to intermittently distribute fertilizer through an opening of the fertilizer distribution device 850 to the ground prepared by the blade(s) 210. For example, the distribution of the fertilizer may be performed according to a fertilizer distribution pattern, wherein the control unit 300 (or another control unit or device of the system 100) is configured to operate the fertilizer distribution device 850 based on the fertilizer distribution pattern.

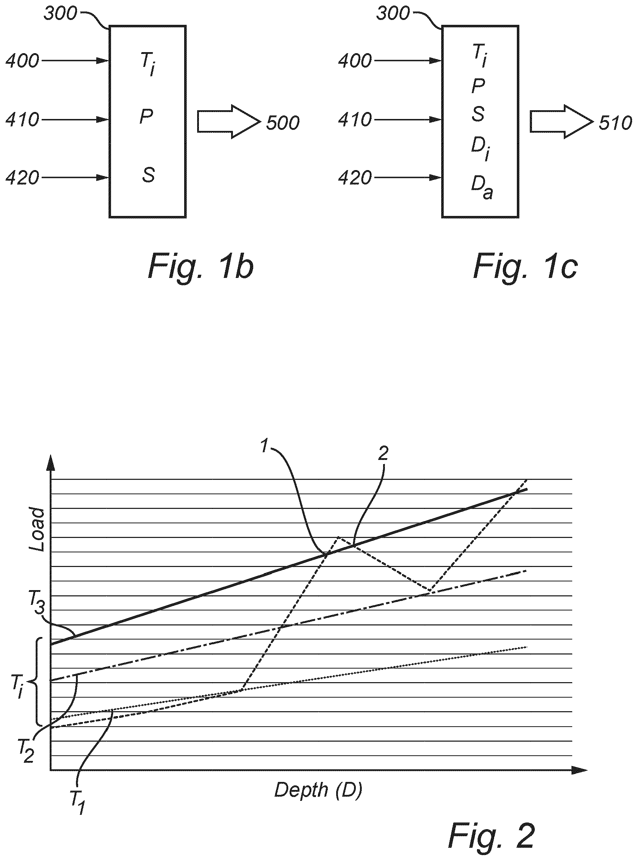

Fig. 1b schematically indicates the control unit 300 of Fig. 1a and its operation related to the raising 500 of the blade unit 200. Hence, it is also referred to Fig. 1a for an increased understanding and/or references of the system 100 and/or control unit 300. Based on at least one of (i.e. one or more of)
- at least one load threshold, Tᵢ, (i.e. threshold(s), Tᵢ, associated with the load 400 applied on the blade(s) 210),
- a power threshold, P, (i.e. a power threshold, P, associated with a power parameter 410 of the vehicle 110), and
- a skid threshold, S, (i.e. a threshold, S, associated with the skidding or slipping of one or more wheels 430 of the vehicle 110),
the control unit 300 is configured to indicate a raising 500 of the blade unit 200 in case of at least one of (i.e. one or more of)
- the load 400 applied on the at least one blade 210 and registered by the system 100 exceeds at least one of the at least one load threshold, Tᵢ, (i.e. exceeds one or more thresholds, Tᵢ),
- the power parameter 410 of the vehicle 110 exceeds the power threshold, P, and
- the skid parameter 420 exceeds the skid threshold, S.

Hence, the control unit 300 is configured to indicate a raising 500 of the blade unit in case of one or more of this (these) criteria is (are) fulfilled, i.e. any possible combination (permutation) of the different criteria or cases. For example, the control unit 300 may be configured to indicate a raising 500 of the blade unit 200 (only) in case the load 400 applied on the blade(s) 210 and registered by the system 100 exceeds one or more of the load threshold(s), Tᵢ. According to another example, the control unit 300 may be configured to indicate a raising 500 of the blade unit 200 (only) in case the power parameter 410 of the vehicle 110 exceeds the power threshold, P, and/or the skid parameter 420 exceeds the skid threshold, S.

Fig. 1c schematically indicates the control unit 300 of Fig. 1a and its operation related to the lowering 500 of the blade unit 200. Hence, it is also referred to Fig. 1a for an increased understanding and/or references of the system 100 and/or control unit 300. The control unit 300, based on at least one of (i.e. one or more of)
- at least one load threshold, Tᵢ,
- a power threshold, P, and
- a skid threshold, S,
is configured to indicate a lowering of the blade unit 200 in case the at least one blade 210 is at a depth, Dₐ, wherein |Dₐ| < |Di| (i.e. that the actual depth, Dₐ, is smaller in magnitude (absolute value) such that |Dₐ| < |Di| is fulfilled) and in case of at least one of (i.e. one or more of)
- the load 400 applied on the at least one blade 210 and registered by the system 100 subceeds at least one of the at least one threshold, Tᵢ,
- the power parameter 410 of the vehicle 110 subceeds the power threshold, P, and
- the skid parameter subceeds the skid threshold, S.

Hence, if |Dₐ| < |Dᵢl, the control unit 300 is configured to indicate a lowering 510 of the blade unit 200 in case of one or more of this (these) criteria is (are) fulfilled, i.e. any possible combination (permutation) of the different criteria or cases. For example, the control unit 300 may be configured to indicate a lowering 510 of the blade unit 200 (only) in case the load 400 applied on the blade(s) 210 and registered by the system 100 subceeds one or more of the load threshold(s), Tᵢ. According to another example, the control unit 300 may be configured to indicate a lowering 510 of the blade unit 200 (only) in case the power parameter 410 of the vehicle 110 subceeds the power threshold, P, and/or the skid parameter 420 subceeds the skid threshold, S.

Fig. 2 schematically shows a diagram associated with a system according to an exemplifying embodiment of the present invention. It is referred to Figs. 1a-c for an increased understanding of the system and/or references of the system.

The x-axis of the diagram represents a depth, D, of the blade(s) of the blade unit in the ground or soil upon operation of the system. The depth, D, may, for example, be in the range of 100 - 600 mm. The y-axis of the diagram represents a load (arbitrary units) applied on the blade(s) of the blade unit. Fig. 2 indicates load thresholds, Tᵢ, associated with the load applied on the blade(s). Here, the load thresholds, Tᵢ, are exemplified as three load thresholds, Tᵢ, comprising a first load threshold, T₁, associated with a first soil resistance, H₁, of the ground, a second load threshold, T₂, associated with a second soil resistance, H₂, of the ground, and a third load threshold, T₃, associated with a third soil resistance, H₃, of the ground, wherein H₁ < H₂ < H₃. For example, the first soil resistance, H1, may be denoted (represent) fine grain soil (i.e. ground or soil of relatively low resistance), the second soil resistance, H₂, may be denoted (represent) root reinforced soil (i.e. ground or soil of medium resistance), and the third soil resistance, H₃, may be denoted (represent) soil of stones and stumps (i.e. ground or soil of relatively high resistance). The load thresholds, Tᵢ, increase with depth, D. For example, in case of ground or soil of relatively high resistance, the third soil resistance, H₃, may be associated with a (the) load threshold, T₃, of the system. Accordingly, in case the load applied on the blade(s) exceeds the load threshold, T₃, as indicated by the dashed line at instance/position 1 in the diagram, the system may indicate a raising of the blade unit. The raising of the blade unit may impart a decrease of the load applied on the blade(s), resulting in the load applied on the blade(s) subceeding the load threshold, T₃, as indicated by the dashed line at instance/position 2 in the diagram, whereby the system may indicate a lowering of the blade unit. It should be noted that the system may further raise/lower the blade unit with respect to the power parameter of the vehicle exceeding/subceeding the power threshold, and/or the skid parameter exceeding/subceeding the skid threshold, in an analogous matter, not indicated in the diagram.

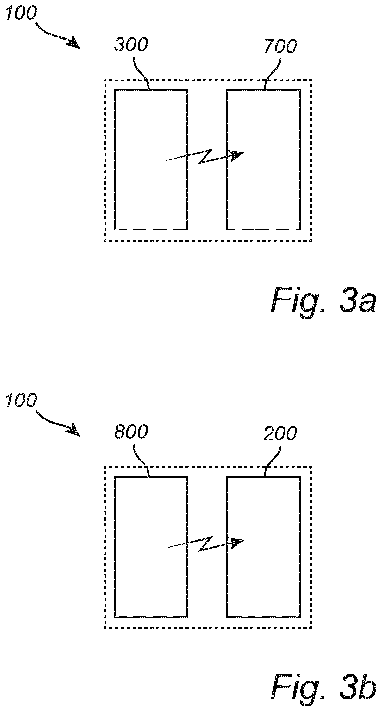

Fig. 3a schematically indicates a system 100 according to an exemplifying embodiment of the present invention. The system 100 comprises a display 700 coupled to the control unit 300, wherein the display 700 is configured to indicate (e.g. to an operator of a vehicle to which the system 100 is coupled) the raising of the blade unit and/or the lowering of the blade unit.

Fig. 3b schematically indicates a system 100 according to an exemplifying embodiment of the present invention. The system 100 comprises a manual control 800 coupled to the blade unit 200 and operable by an operator of the vehicle to which the system 100 is coupled. The manual control 800 is arranged to control the raising of the blade unit and the lowering of the blade unit.

The person skilled in the art realizes that the present invention by no means is limited to the preferred embodiments described above. On the contrary, many modifications and variations are possible within the scope of the appended claims. For example, one or more of the blade(s) 210, the depth, Di, etc., may have different shapes, dimensions and/or sizes than those depicted/described.

## Claims

1. A system (100) arranged for ground preparation and arranged to be integrated with a forestry or agricultural vehicle (110), wherein the system comprises
a blade unit (200) comprising at least one blade (210) arranged to penetrate and prepare ground (220), and
a control unit (300) coupled to the blade unit and configured to attain a desired depth, Di, of the at least one blade in the ground,
wherein the system is configured to register at least one of
a load (400) applied on the at least one blade,
a power parameter (410) of the vehicle, and
a skid parameter (420) associated with a skidding of at least one
wheel (430) of the vehicle,
and
wherein the control unit, based on at least one of
at least one load threshold, Tᵢ,
a power threshold, P, and
a skid threshold, S,
is configured to
indicate a raising (500) of the blade unit in case of at least one of
the load applied on the at least one blade and registered by the system exceeds at least one of the at least one load threshold, Tᵢ,
the power parameter of the vehicle exceeds the power threshold, P,
and
the skid parameter exceeds the skid threshold, S,
and
indicate a lowering (510) of the blade unit in case the at least one blade is at a depth, Dₐ, wherein |Dₐ| < |Di| and in case of at least one of
the load applied on the at least one blade and registered by the system subceeds at least one of the at least one threshold, Tᵢ,
the power parameter of the vehicle subceeds the power threshold, P,
and
the skid parameter subceeds the skid threshold, S.

2. The system according to claim 1, wherein the raising and the lowering of the blade unit, respectively, comprises a pivotal movement of the at least one blade.

3. The system according to claim 2, wherein the load applied on the at least one blade is associated with a torque about a pivot of the at least one blade.

4. The system according to any one of the preceding claims, further comprising at least one sensor (600) coupled to the blade unit, wherein the at least one sensor is configured to sense the load applied on the at least one blade.

5. The system according to any one of the preceding claims, wherein the at least one load threshold, Tᵢ, is dependent on the desired depth, Di, of the at least one blade in the ground.

6. The system according to any one of the preceding claims, wherein the at least one load threshold, Tᵢ, is dependent on a soil resistance, Hᵢ, of the ground.

7. The system according to any one of the preceding claims, wherein the at least one load threshold, _{Ti}, comprises
a first load threshold, Tᵢ, associated with a first soil resistance, Hᵢ, of the ground,
a second load threshold, T₂, associated with a second soil resistance, H₂, of the ground, and
a third load threshold, T₃, associated with a third soil resistance, H₃, of the ground,
wherein H₁ < H₂ < H₃.

8. The system according to any one of the preceding claims, further comprising a display (700) coupled to the control unit, wherein the display is configured to indicate [to an operator of the vehicle], at least one of
the raising of the blade unit, and
the lowering of the blade unit.

9. The system according to any one of the preceding claims, further comprising a manual control (800) coupled to the blade unit and operable by an operator of the vehicle, wherein the manual control is arranged to control
the raising of the blade unit, and
the lowering of the blade unit.

10. The system according to any one claims 1-8, configured to automatically control
the raising of the blade unit, and
the lowering of the blade unit.

11. A planting system arranged to be integrated with a forestry or agricultural vehicle, wherein the planting system comprises
a system according to any one of the preceding claims, and
a fertilizer distribution device (850) configured to intermittently distribute fertilizer through an opening of the fertilizer distribution device to the ground prepared by the at least one blade according to a fertilizer distribution pattern, wherein the control unit is configured to operate the fertilizer distribution device based on the fertilizer distribution pattern.

12. Forestry or agricultural vehicle (900) arranged for ground preparation, comprising one of
a system according to any one of claims 1-10, and
a planting system according to claim 11.

13. A method (1000) for a system (100) arranged for ground preparation and arranged to be integrated with a forestry or agricultural vehicle (110), wherein the system comprises a blade unit (200) comprising at least one blade (210) arranged to penetrate and prepare ground (220), wherein the method comprises
registering (1010) at least one of
a load (400) applied on the at least one blade,
a power parameter (410) of the vehicle, and
a skid parameter (420) associated with a skidding of at least one
wheel (430) of the vehicle,
and
based on at least one of
at least one load threshold, Tᵢ,
a power threshold, P, and
a skid threshold, S,
indicating (1020) a raising (500) of the blade unit in case of at least one of
the load applied on the at least one blade and registered by the method exceeds at least one of the at least one load threshold, Tᵢ,
the power parameter of the vehicle exceeds the power threshold, P,
and
the skid parameter exceeds the skid threshold, S,
and
indicating (1030) a lowering (510) of the blade unit in case the at least one blade is at a depth, Dₐ, wherein |Dₐ| < |Di| and in case of at least one of
the load applied on the at least one blade and registered by the method subceeds at least one of the threshold, Tᵢ,
the power parameter of the vehicle subceeds the power threshold, P,
and
the skid parameter subceeds the skid threshold, S.
